# EUROPÄISCHE PATENTSCHRIFT

(11) **EP 0 577 671 B1**
(45) Veröffentlichungstag und Bekanntmachung des Hinweises auf die Patenterteilung: **11.10.1995**
(21) Anmeldenummer: 92907303.9
(22) Anmeldetag: 01.04.1992
(51) Int. Cl.: F16D 55/226, F16D 55/2265, F16D 55/227, F16D 55/224, F16D 55/225, F16D 55/228, F16D 55/02, F16D 55/00

(54) **SCHWIMMSATTEL-TEILBELAGSCHEIBENBREMSE MIT EINEM BREMSENGEHÄUSE AUS LEICHTMETALL**
FLOATING CALIPER, PARTIAL LINING DISK BRAKE WITH A LIGHT METAL BRAKE HOUSING
FREIN A DISQUE A GARNITURE PARTIELLE A ETRIER FLOTTANT AYANT UN BOITIER EN METAL LEGER

(30) Priorität: 04.04.1991 DE 4110870; 29.01.1992 DE 4202394
(43) Veröffentlichungstag der Anmeldung: 12.01.1994
(73) Patentinhaber: ALFRED TEVES GmbH, 60441 Frankfurt (DE)
(72) Erfinder: WEILER, Rolf, D-6239 Eppstein 2 (DE); RÜKKERT, Helmut, D-6107 Reinheim 3 (DE); MEHNER, Götz, D-6100 Darmstadt (DE)
(86) Internationale Anmeldenummer: EP9200718
(87) Internationale Veröffentlichungsnummer: WO9217712

(56) Entgegenhaltungen:
- DE-A- 1 600 139
- DE-A- 2 533 058
- DE-A- 2 950 660
- DE-B- 1 286 845
- GB-A- 2 087 490
- US-A- 3 889 785
- US-A- 3 997 032

## Beschreibung

Die Erfindung betrifft eine Schwimmsattel-Teilbelagscheibenbremse für Kraftfahrzeuge, deren Bremsengehäuse aus Leichtmetall gegossen und mittels Bolzen oder Hülsen aus einem hochfesten Werkstoff verstärkt ist.

Man ist allgemein bestrebt, das Gewicht von Kraftfahrzeugen zu vermindern, um den Kraftstoffverbrauch zu senken, und speziell daran interessiert, die am Fahrzeugrad angeordneten, ungefederten Massen so klein wie möglich zu halten, um die Fahreigenschaften zu verbessern. Aus diesen Gründen gewinnt die Leichtbauweise bei Fahrzeugbremsen immer mehr an Bedeutung.

Bei einer nach US-A-3 997 032 bekannten Teilbelagscheibenbremse gemäß dem Oberbegriff des Patentanspruchs 1 überträgt ein U-förmiger Schwimmsattel die zum Andruck der Bremsbacken an die Bremsscheibe erforderliche hohe Zuspannkraft. Dabei ist besonders eine die Bremsscheibe übergreifende Sattelbrücke hohen Biegespannungen ausgesetzt. Damit sich der Schwimmsattel beim Bremsen nicht unzulässig weit aufbiegt, muß er eine hohe Steifigkeit aufweisen. Andererseits ist der radiale Einbauraum zwischen dem äußeren Rand der Bremsscheibe und der Radfelge begrenzt.

Es besteht daher die Notwendigkeit, für den Schwimmsattel ein hochfestes Material mit hohem Elastizitätsmodul vorzusehen. Verbreitet ist die Verwendung von Grauguß oder ähnlichen hochfesten Materialien, die aber ein relativ hohes spezifisches Gewicht aufweisen. Leichtmetalle, beispielsweise Aluminium oder leichte Legierungen besitzen jedoch geringe Elastizitätsmodule, jedenfalls wenn der Materialpreis im wirtschaftlich vertretbaren Rahmen liegen soll.

Es sind nun beispielsweise aus der DE-OS 29 50 660 Teilbelagscheibenbremsen mit einem Schwimmsattel aus Leichtmetall bekannt, bei denen besonders stark beanspruchte Bereiche des Sattelgehäuses mit eingegossenen Einlegeteilen aus einem hochfesten Werkstoff verstärkt sind. Diese Sattelgehäuse haben den Nachteil, daß die Einlegeteile vom Leichtmetall vollständig ummantelt sind, wobei die auf Zug besonders stark belasteten, der Bremsscheibe benachbarten Oberflächenzonen aus Leichtmetall bestehen. Weiterhin müssen die Einlegeteile aufgrund ihrer an den Schwimmsattel angepaßten Form speziell für diesen Zweck hergestellt werden, was nicht unerhebliche Zusatzkosten verursacht.

Bei einer aus der DE-AS 12 86 845 bekannten gattungsgemäßen Scheibenbremse wird der Schwimmsattel durch einen in einer achsparallelen Bohrung der Sattelbrücke angeordneten Schraubbolzen verstärkt. Nachteilig ist bei dieser Anordnung der Bolzen nicht in dem besonders stark auf Zug belasteten, dem radial äußeren Rand der Bremsscheibe und der Bremsbacken unmittelbar benachbarten Bereich der Sattelbrücke angeordnet. Außerdem wird ein kompliziert ausgestalteter und damit teurer Spezialbolzen verwendet.

Aufgabe der Erfindung ist es, eine gattungsgemäße Teilbelagscheibenbremse hinsichtlich Gewicht und Steifigkeit des Sattelgehäuses zu optimieren, ohne den Einbauraum zu vergrößern.

Die Lösung der Aufgabe ergibt sich aus dem kennzeichnenden Teil des Patentanspruchs 1. Durch die Anordnung der Bolzen in unmittelbarer Nähe der Bremsscheibe wird die Steifigkeit des Schwimmsattels optimiert. Die erfindungsgemäße Bremse weist bei reduziertem Gewicht im wesentlichen dieselben Abmessungen und vergleichbare Leistungen auf, wie eine Bremse aus herkömmlichem Material, beispielsweise Grauguß, wobei die Herstellungskosten in wirtschaftlich vertretbarem Rahmen bleiben.

Bevorzugte Ausführungsformen der erfindungsgemäßen Schwimmsattel-Teilbelagscheibenbremse ergeben sich aus den Ansprüchen 2 bis 16.

Anspruch 17 betrifft eine Brembacke mit besonderen Ausformungen zum Einbau in die erfindungsgemäße Scheibenbremse.

Ausführungsbeispiele der Erfindung werden nachfolgend anhand der Zeichnungen näher erläutert.

Es zeigen
- Fig. 1: eine teilweise gemäß Linie A-A von Fig. 4 geschnittene Seitenansicht einer erfindungsgemäßen Bremse in einer ersten Ausführungsform,
- Fig. 2: eine andere, teilweise geschnittene Seitenansicht derselben Bremse,
- Fig. 3: eine teilweise geschnittene Seitenansicht einer erfindungsgemäßen Bremse in einer zweiten Ausführungsform,
- Fig. 4: eine teilweise geschnittene Draufsicht auf eine erfindungsgemäße Bremse in einer dritten Ausführungsform,
- Fig. 5: ein perspektivisch dargestelltes Detail derselben Bremse,
- Fig. 6: drei Ausführungsbeilspiele für die Köpfe der Bolzen,
- Fig. 7: eine teilweise geschnittene Seitenansicht einer erfindungsgemäßen Bremse in einer vierten Ausführungsform,
- Fig. 8: eine Seitenansicht derselben Bremse aus der Gegenrichtung,
- Fig. 9: einen Schnitt gemäß Linie C-C von Fig. 7,
- Fig. 10: einen Schnitt gemäß Linie B-B von Fig. 7,
- Fig. 11: Querschnitte von zwei verschieden ausgeführten Hülsen mit und ohne Schlitz,
- Fig. 12: eine teilweise geschnittene Prinzipskizze eines Schwimmsattels, der mit massiven zylindrischen Stiften verstärkt ist,
- Fig. 13: ein Detail mit einer Sicherungsmaßnahme für einen massiven Stift,
- Fig. 14: einen Querschnitt eines massiven Stifts,
- Fig. 15: eine teilweise geschnittene Prinzipskizze eines Schwimmsattels in einer fünften Ausführungsform mit Schraubbolzen,
- Fig. 16: zwei Ausführungsbeispiele für die Köpfe der Schraubbolzen,
- Fig. 17: eine teilweise geschnittene Seitenansicht eines Schwimmsattels in einer sechsten Ausführungsform mit einem durch weitere Stifte verstärkten Schenkel,
- Fig. 18: einen Schnitt gemäß Linie D-D von Fig. 17,

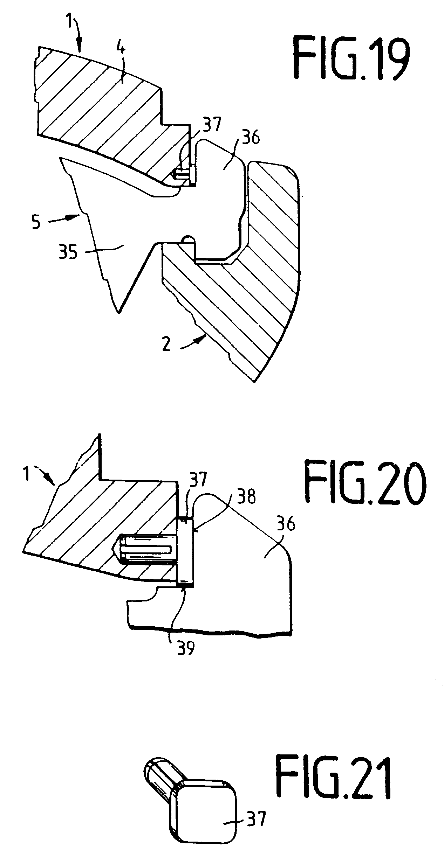

- Fig. 19: eine vorteilhafte Ausgestaltung der Abstützung eines Leichtmetall-Schwimmsattels an einer Bremsbacke,
- Fig. 20: ein vergrößertes Detail aus Fig. 19,
- Fig. 21: eine perspektivische Darstellung eines zur Abstützung des Schwimmsattels geeigneten Kerbnagels.

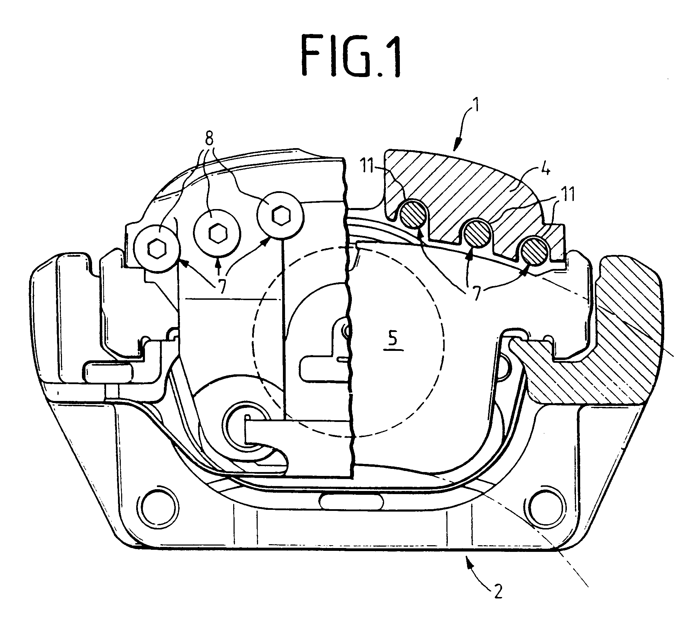

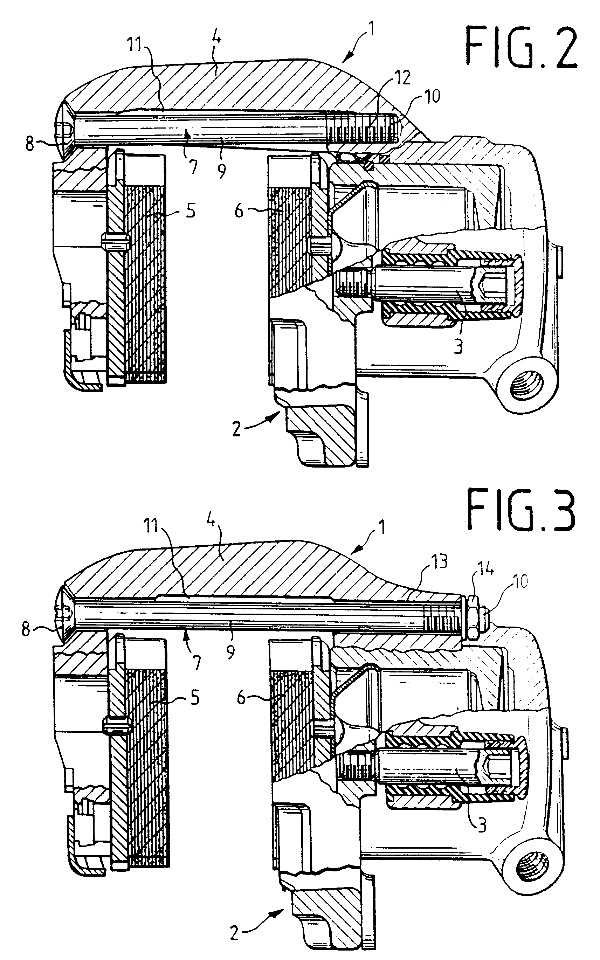

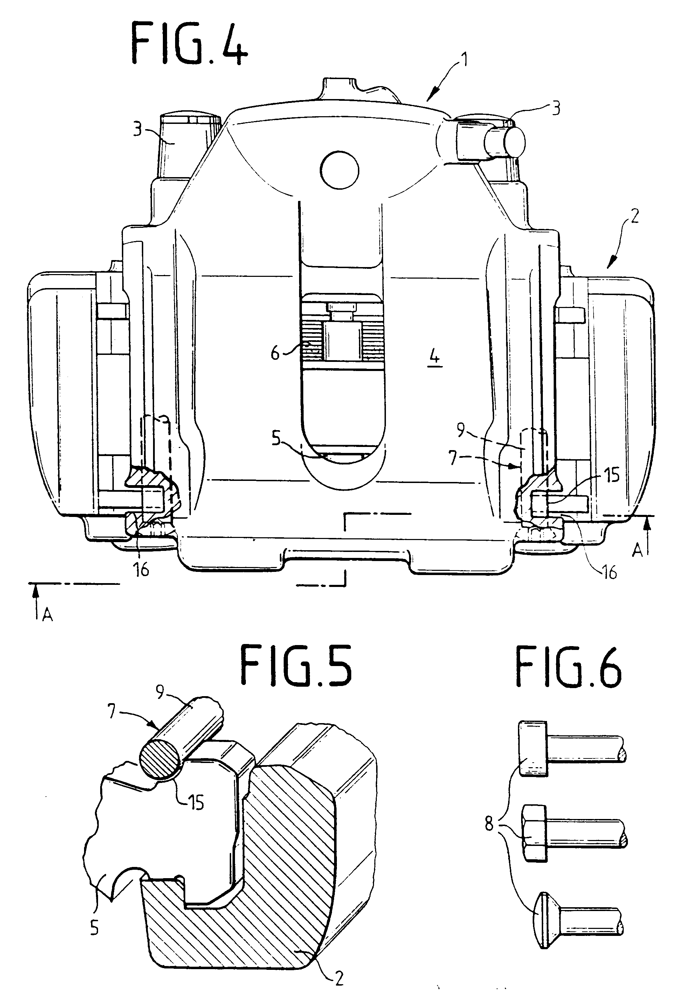

Eine gattungsgemäße Schwimmsattel-Teilbelagscheibenbremse weist einen im Profil U-förmigen Schwimmsattel 1 aus Aluminiumguß auf, der an einem Bremsträger 2 mittels Bolzenführungen 3 verschiebbar gelagert ist. Der Schwimmsattel 1 weist eine Sattelbrücke 4 auf, die zwei Bremsbacken 5,6 und eine nicht gezeigte Bremsscheibe axial überspannt. Innerhalb der Sattelbrücke 4 sind sechs Stahlbolzen 7 axial angeordnet, die jeweils einen Kopfabschnitt 8, einen mittleren Abschnitt 9 und einen Endabschnitt 10 aufweisen. Der Endabschnitt 10 ist mit einem Schraubgewinde versehen. Im Durchgangsbereich der Bolzen 7 weist die Sattelbrücke 4 Aussparungen 11 auf, durch die sich die mittleren Abschnitte 9 erstrecken. An den axial äußeren Seiten der Sattelbrücke 4 sind die Bolzen 7 formschlüssig mit dem Schwimmsattel 1 verbunden. Dabei kann der Endabschnitt 10 entweder, wie in Fig. 2 gezeigt, in ein Gewinde 12 des Schwimmsattels 1 eingeschaubt sein oder, wie in Fig. 3 gezeigt, durch eine Bohrung 13 hindurchgehen und außerhalb des Schwimmsattels 1 mittels einer Schraubenmutter 14 verschraubt sein. Außer den in den Fig. 1 bis 3 gezeigten, linsenförmigen Köpfen 8 der Bolzen 7 werden auch die in Fig. 6 gezeigten Zylinder oder Sechskantköpfe empfohlen.

Bei der in den Fig. 4 und 5 dargestellten, weiterentwickelten Scheibenbremse ist der Schwimmsattel 1 auf seiner äußeren Axialseite an einer radial äußeren Schmalseite 15 der Bremsbacke 5 abgestützt. Der Schwimmsattel 1 weist an den zur Abstützung vorgesehenen Stellen Ausnehmungen 16 auf, durch die ein Bolzen 7 verläuft. Der Bolzen 7 liegt mit seinem mittleren Abschnitt 9 an der Fläche 15 der Bremsbacke 5 an, wodurch der Schwimmsattel 1 abgestützt wird.

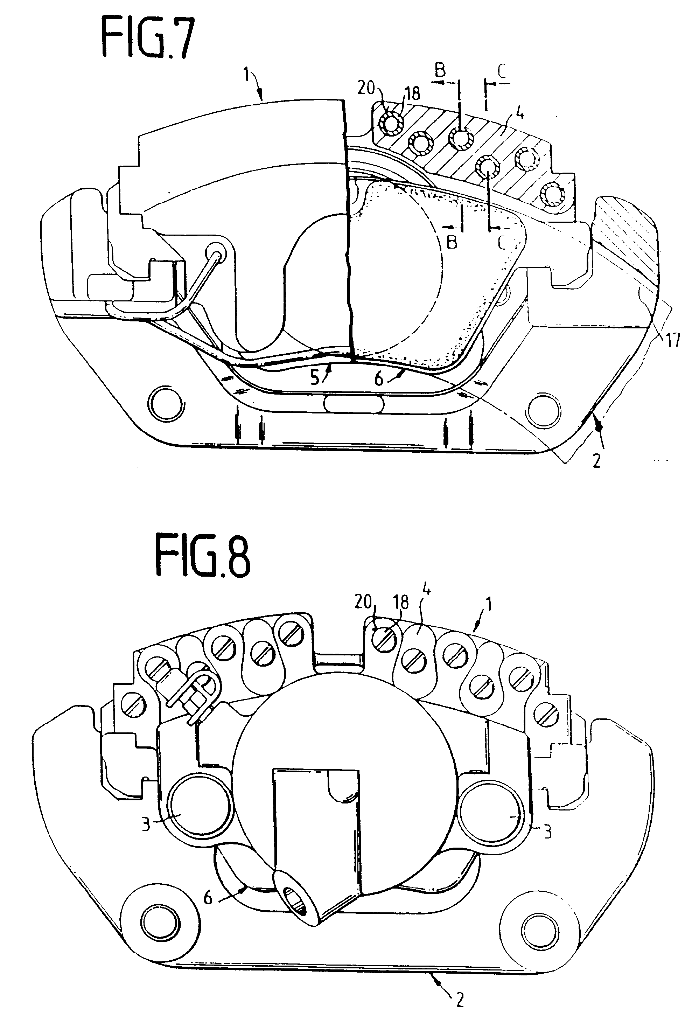

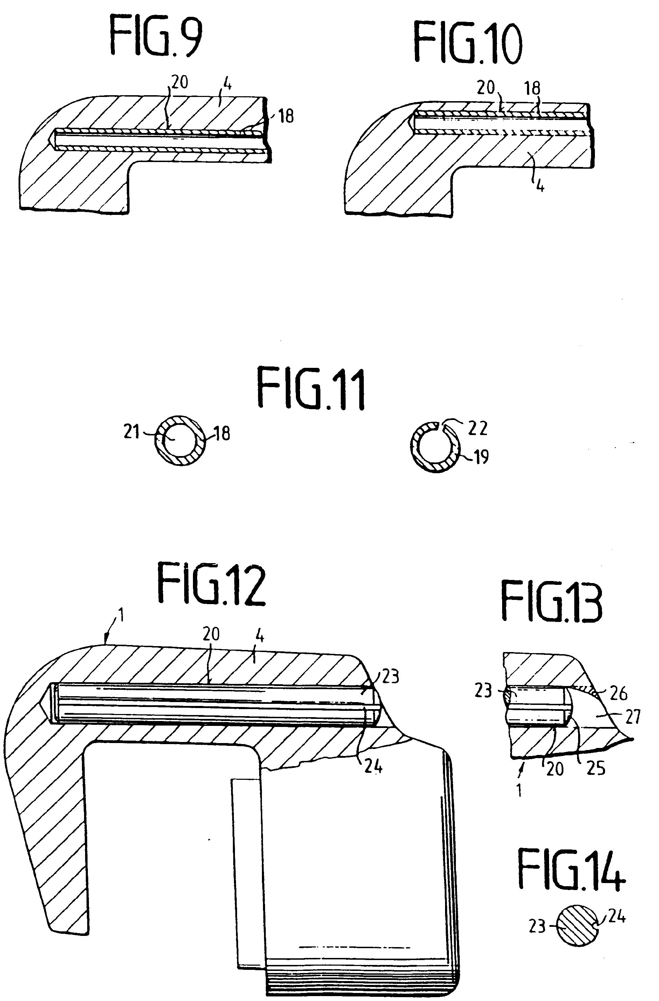

In den Fig. 7 bis 11 ist eine weitere Ausführungsform einer erfindungsgemäAen Schwimmsattel-Teilbelagscheibenbremse dargestellt. Ein Schwimmsattel 1 aus Aluminiumguß ist wiederum mittels Bolzenführungen 3 an einem Bremsträger 2 axial verschiebbar geführt. Die Sattelbrücke 4 erstreckt sich in axialer Richtung über den äußeren Rand 17 der Bremsscheibe und über die beiderseits der Bremsscheibe angeordneten Bremsbacken 5,6. Der Schwimmsattel 1 ist im Bereich der Sattelbrücke 4 mit Verstärkungselementen versehen. Als Verstärkungselemente dienen zwölf Hülsen 18, die als dickwandige Rohre ausgeführt und in zwei Reihen übereinander und zueinander versetzt angeordnet sind. Wie man am besten in den Fig. 9 oder 10 erkennt, sind die Hülsen 18 in Sackbohrungen 20 der Sattelbrücke 4 eingesteckt. Die Sattelbrücke 4 wird durch die Hülsen 20 nur bei Biegebeanspruchung verstärkt. Bei Zugbelastung der Sattelbrücke 4 wird durch die Hülsen 18 im wesentlichen keine Verstärkung erzielt, da die Hülsen 18 in den Bohrungen 20 im wesentlichen keine axiale Vorspannung aufweisen. Die Hülsen 18 bestehen aus Stahl und ihre Oberflächen sind verzinkt und vernickelt. Beim Einstecken bzw. Einpressen der Hülsen 18 in die Sackbohrungen 20 kann die in den Sackbohrungen 20 enthaltene Luft durch den inneren Hohlraum 21 der Hülsen 18 entweichen. In Fig. 11 ist eine Hülse 18 und eine modifizierte Hülse 19 im Querschnitt dargestellt. Die Hülse 19 weist zusätzlich einen Schlitz 22 auf, der sich über die gesamte Länge der Hülse 19 erstreckt. Die geschlitzen Hülsen 19 besitzen eine höhere Elastizität als die-Hülsen 18. Deshalb liegen die Hülsen 19 mit ihren Umfangsflächen stets fest an den Innenflächen der Bohrungen 20 an und gewährleisten damit einen zuverlässigen Klemmsitz der Hülsen 19 in den Bohrungen 20. Auch dann, wenn sich das Material der Hülse 19 und das Material des Schwimmsattels 1 unter Wärmeeinwirkung unterschiedlich ausdehnen.

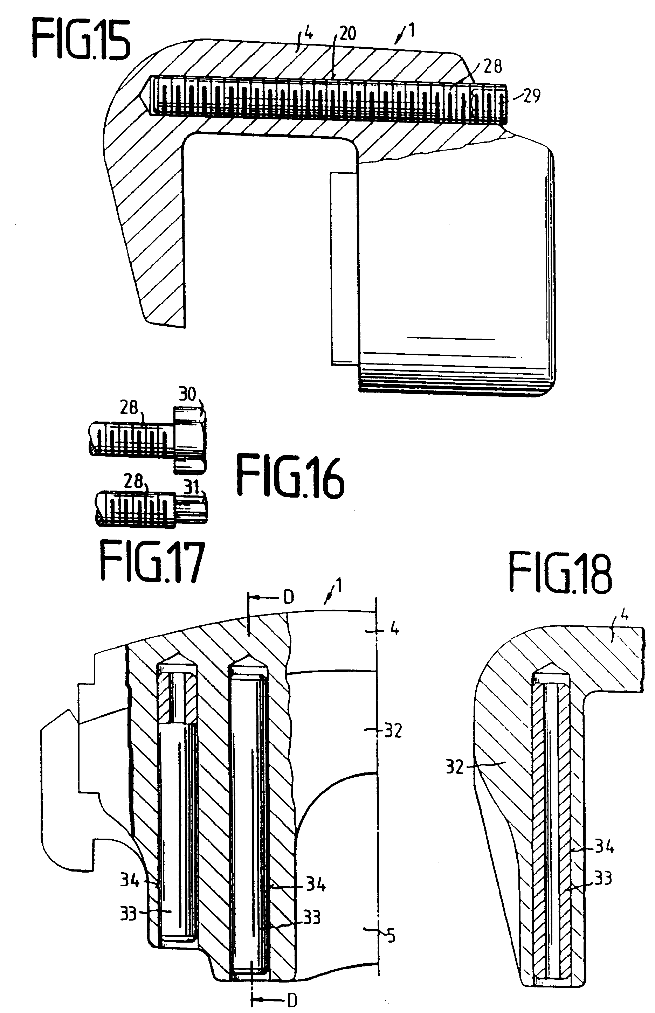

In einer Abwandlung des beschriebenen Ausführungsbeispiels, die in den Fig. 12 bis 14 dargestellt ist, sind als Verstärkungselemente massive zylindrische Stifte 23 vorgesehen, die ebenfalls in Sackbohrungen 20 eingepreßt sind. Um das Entweichen der in den Sackbohrungen 20 enthaltenen Luft beim Einpressen zu ermöglichen, sind die Stifte 23 mit einer über ihre gesamte Länge verlaufenden Nut 24 versehen. Wenn sich der Preßsitz der Stifte 23 in den Bohrungen 20 bei starken Temperaturänderungen lockern sollte, wird eine Sicherung gemäß Fig. 13 empfohlen. Der Stift 23 ist hier etwas kürzer ausgeführt, so daß sein Ende 25 vollständig in die Bohrung 20 versenkt werden kann. Nach dem Einpressen des Stiftes 23 wird die Öffnung 27 der Bohrung 20 mittels einer Verformung 26 geringfügig verkleinert, so daß der Stift 23, selbst wenn er sich lockern sollte, nicht aus der Bohrung 20 herausrutschen kann.

Ein weiteres Ausführungsbeispiel der Erfindung ist in den Fig. 15 und 16 dargestellt. Die Sattelbrücke 4 des Schwimmsattels 1 ist wiederum mit Sackbohrungen 20 versehen, die sich im Prinzip in ihrer Anordnung, Ausgestaltung und Herstellungsweise nicht von den Sackbohrungen 20 der vorangehenden Ausführungsbeispiele unterscheiden. Der Unterschied besteht bei diesem Ausführungsbeispiel darin, daß als Verstärkungselemente Schraubbolzen 28 aus Stahl vorgesehen sind, die über ihre gesamte Einschraublänge eine Gewindestruktur aufweisen, durch die beim Einschrauben der Schraubbolzen 28 in die ursprünglich glatten Bohrungen 20 ein Gewinde eingeschnitten wird. Im Gegensatz zu den Stahlbolzen 7 des ersten Ausführungsbeispiels weisen die Schraubbolzen 28 also ein zur Formung eines Gewindes geeignete Gewindestruktur auf. Dadurch wird gewährleistet, daß die Mantelfläche der Schraubbolzen 28 ohne Spiel fest an der Innenwand der Bohrung 20 anliegt, wodurch die Sattelbrücke 4 und die Schraubbolzen 28 extrem fest und spielfrei miteinander verbunden sind. Wie im vorangegangenen Ausführungsbeispiel erzeugen die Schraubbolzen 28 auch hier keine axiale Vorspannung. Auch darin unterscheiden sie sich von den Stahlbolzen 7 des ersten Ausführungsbeispiels. Zum Eingriff eines Schraubwerkzeugs können die Stahlbolzen, wie in Fig. 15 gezeigt, mit einem Innensechskant 29 oder, wie in Fig. 16 gezeigt, mit einem Außensechskant 30 oder einem sternförmigen Schraubkopf 31 versehen sein.

Eine weitere Variante einer erfindungsgemäßen Schwimmsattel-Teilbelagscheibenbremse, die in Verbindung mit allen vorangehenden Ausführungsbeispielen realisierbar ist, wird in den Fig. 17 und 18 dargestellt. Der Schwimmsattel 1 weist einen an die Sattelbrücke 4 angrenzenden Schenkel 32 auf, der sich im wesentlichen parallel zur Bremsscheibe erstreckt. Der Schenkel 32 dient zum Andruck der anliegenden Bremsbacke 5 an die Bremsscheibe. Zur Versteifung des Schenkels 32 sind vier Verstärkungselemente in Form von Hülsen 33 vorgesehen, von denen in der Fig. 17 nur die zwei auf der linken Seite des Schenkels 32 angeordneten Hülsen 33 sichtbar sind. Die Hülsen 33 sind in Sackbohrungen 34 eingesteckt. Selbstverständlich können bei dieser Variante die Verstärkungselemente auch entsprechend den in den Fig. 11 bis 16 dargestellten Ausführungsformen ausgestaltet sein.

Schließlich sei noch auf ein Ausgestaltungsdetail hingewiesen, das die Abstützung eines Schwimmsattels 1 aus Aluminiumguß an den Schmalseiten einer Bremsbacke 5 betrifft. Die Bremsbacke 5 besteht hier aus einer Rückenplatte 35, die einen nicht gezeigten Reibbelag trägt und an ihren in Umfangsrichtung der Bremsscheibe liegenden Seiten mit hammerkopfförmigen Vorsprüngen 36 versehen ist. Der Schwimmsattel 1 ist im Bereich seiner Sattelbrücke 4 an einer Schmalseite der Vorsprünge 36 abgestützt. Da der Schwimmsattel 1 aus Aluminiumguß und die Rückenplatte 35 aus Stahl besteht, ergeben sich bei einem direkten Kontakt dieser beiden Teile Probleme. Aufgrund der unterschiedlichen elektrochemischen Potentiale der verschiedenen Metalle tritt an einer Berührungsstelle verstärkt Korrosion auf. Außerdem kann das weichere Aluminium von dem härteren Stahl durch verstärkten Abrieb beschädigt werden. Zur Vermeidung dieser Probleme ist im Bereich der Berührungsstelle in den Schwimmsattel 1 ein Kerbnagel 37 eingefügt, der einen relativ großen, im wesentlichen quadratischen Kopf aufweist. Der Kerbnagel 37 besteht aus Stahl und besitzt Anlageflächen 38,39, die zur Anlage an korrespondierenden Flächen der Vorsprünge 36 bestimmt sind. Der Kopf des Kerbnagels steht in Umfangsrichtung und in radialer Richtung über die Seitenflächen des Schwimmsattels hinaus, so daß das Material des Schwimmsattels (Aluminiumguß) nicht mit der Rückenplatte 35 in Berührung kommen kann. Da nur die stählernen Anlageflächen 38,39 des Kerbnagels 37 mit der Rückenplatte 35 in Berührung kommen, treten die genannten Korrosionsprobleme nicht auf.

## Patentansprüche

1. Schwimmsattel-Teilbelagscheibenbremse mit einem zum Andruck beiderseits einer Bremsscheibe angeordneter Bremsbacken (5,6) bestimmten Schwimmsattel (1), der die Bremsbacken (5,6) U-förmig umgreift und der eine, den radial äußeren Rand der Bremsscheibe und die Bremsbacken (5,6) axial überspannende Sattelbrücke (4) aufweist, die die Zuspannkraft zum Andruck der Bremsbacken (5,6) überträgt, mit mindestens einem, innerhalb der Sattelbrücke (4) im wesentlichen parallel zur Bremsscheibenachse angeordneten Verstärkungselement, insbesondere einen Schraubenbolzen, wobei der Schwimmsattel (1) überwiegend aus Aluminiumguß besteht und das oder die Verstärkungselemente aus einem hochfesten Werkstoff bestehen, dadurch **gekennzeichnet**, daß die zur Erhöhung der Biegesteifigkeit des Schwimmsattels (1) vorgesehenen Verstärkungselemente aus im wesentlichen zylindrischen Stiften (23) oder Hülsen (18,19) oder Schraubbolzen (7,28) bestehen, die im wesentlichen ohne axiale Vorspannung in im wesentlichen parallel zur Bremsscheibenachse verlaufende Aussparungen (11) oder Bohrungen (20) der Sattelbrücke (4) eingesteckt oder eingeschraubt sind, wobei ein mittlerer Abschnitt (9) der Verstärkungselemente in unmittelbarer Nähe des radial äußeren Bremsscheibenrandes angeordnet ist.

2. Scheibenbremse nach Anspruch 1, dadurch **gekennzeichnet**, daß die Verstärkungselemente (7,18,19,23,28) aus Stahl bestehen.

3. Scheibenbremse nach Anspruch 2, dadurch **gekennzeichnet**, daß die Oberflächen der Verstärkungselemente (7,18,19,23,28) verzinkt und/oder vernickelt sind.

4. Scheibenbremse nach einem der Ansprüche 1 bis 3, dadurch **gekennzeichnet,** daß die Verstärkungselemente handelsübliche Schraubbolzen (7) aus Stahl sind, die an ihren beiden Endabschnitten (8,10) mit dem Schwimmsattel (1) formschlüssig verbunden sind.

5. Scheibenbremse nach einem der vorhergehenden Ansprüche, dadurch **gekennzeichnet**, daß der Schwimmsattel (1) an der oder den zur Abstützung vorgesehenen Stellen Ausnehmungen (16) aufweist, durch die ein Bolzen (7) verläuft und daß der Bolzen (7) an einer radial äußeren Schmalseite (15) einer Bremsbacke (5) abgestützt ist.

6. Scheibenbremse nach Anspruch 5, dadurch **gekennzeichnet**, daß die radial äußere Schmalseite (15) der Bremsbacke (5) an der zur Abstützung des Schwimmsattels (1) vorgesehenen Stelle, vorzugsweise bogenförmig an den anliegenden Bolzen (7) angepaßt ist.

7. Scheibenbremse nach einem der Ansprüche 1 bis 3, dadurch **gekennzeichnet**, daß die Verstärkungselemente als hohlzylindrische Hülsen (18,19) oder Rohre ausgebildet sind.

8. Scheibenbremse nach Anspruch 7, dadurch **gekennzeichnet**, daß die Hülsen (19) oder Rohre einen in Längsrichtung durchgehenden Schlitz (22) aufweisen.

9. Scheibenbremse nach einem der Ansprüche 1 bis 3, dadurch **gekennzeichnet**, daß die Verstärkungselemente als massive zylindrische Stifte (23) ausgebildet sind.

10. Scheibenbremse nach einem der Ansprüche 7 bis 9, dadurch **gekennzeichnet**, daß die Verstärkungselemente (18,19,23) in die Bohrungen (20) der Sattelbrücke (4) eingepreßt sind.

11. Scheibenbremse nach einem der Ansprüche 7 bis 10, dadurch **gekennzeichnet,** daß die Bohrungen der Sattelbrücke (4) Sackbohrungen (20) sind.

12. Scheibenbremse nach einem der Ansprüche 9 bis 11, dadurch **gekennzeichnet**, daß die Stifte (23) mit einer über ihre gesamte Länge verlaufenden Nut (24) versehen sind.

13. Scheibenbremse nach Anspruch 11, dadurch **gekennzeichnet**, daß die Verstärkungselemente (23) mittels einer Verformung (26) des offenen Endes (27) der Sackbohrungen (20) gesichert sind.

14. Scheibenbremse nach einem der Ansprüche 7 bis 13, dadurch **gekennzeichnet,** daß insgesamt zwölf Verstärkungselemente (18,19,23) in zwölf Bohrungen (20) der Sattelbrücke (4) symmetrisch zur Bremsenmitte und in zwei bezüglich der Bremsscheibenachse übereinanderliegenden Reihen mit jeweils sechs Verstärkungselementen (18,19,23) und versetzt zueinander angeordnet sind.

15. Scheibenbremse nach einem der Ansprüche 7 bis 14, dadurch **gekennzeichnet**, daß in einem an die Sattelbrücke (4) angrenzenden Schenkel (32) des Schwimmsattels (1) weitere Bohrungen (34) mit darin eingesteckten weiteren Verstärkungselementen (33) angeordnet sind, wobei sich die weiteren Verstärkungselemente (33) im wesentlichen parallel zur Bremsscheibe und im wesentlichen senkrecht zur Sattelbrücke 4 erstrecken.

16. Scheibenbremse nach einem der Ansprüche 1 bis 3, dadurch **gekennzeichnet,** daß die Schraubbolzen (28) über ihre gesamte Einschraublänge eine Gewindestruktur aufweisen, durch die beim Einschrauben der Bolzen (28) in die ursprünglich glatten Bohrungen (20) ein Gewinde eingeschnitten wird.

17. Bremsbacke für eine Scheibenbremse nach einem der Ansprüche 5 oder 6, mit einer Rückenplatte, die einen Reibbelag trägt, mit zwei von der Rückenplatte seitlich in Umfangsrichtung abstehenden, hammerkopfförmigen Vorsprüngen, die zur Übertragung der Reibkräfte auf einen Bremsträger (2) und zur radialen Abstützung des Schwimmsattels (1) am Bremsträger(2) bestimmt sind, dadurch **gekennzeichnet**, daß die dem Schwimmsattel (1) zugewandten, radial äußeren Schmalseiten (15) der Vorsprünge mit konkaven im wesentlichen zylindrischen Ausnehmungen versehen sind, an deren Flächen jeweils ein mit dem Schwimmsattel (1) verbundener Bolzen (7) abstützbar ist.

## Claims

1. A floating-caliper spot-type disc brake with a floating caliper (1) which is intended for applying brakes shoes (5, 6) arranged on either side of a brake disc, which straddles the brake shoes (5, 6) in a U-shaped manner and which has a caliper bridge (4) axially straddling the radially external edge of the brake disc and the brake shoes (5, 6) and transmitting the clamping force for applying the brake shoes (5, 6), at least one reinforcing element, in particular a screw bolt, arranged within the caliper bridge (4) essentially in parallel to the brake disc axis, the floating caliper (1) being mainly cast from aluminum and the reinforcing element(s) consisting of a high-tensile material,
**characterized** in that the reinforcing elements provided for augmenting the bending reistance of the floating caliper (1) consist of essentially cylindrical pins (23) or sleeves (18, 19) or screw bolts (7, 28) which, substantially without axial prestress, are plugged or screwed into recesses (11) or bores (20) of the caliper bridge (4), which essentially run in parallel to the brake disc axis, a mid-section (9) of the reinforcing elements being arranged directly adjacent to the radially external brake disc edge.

2. A spot-type disc brake as claimed in claim 1,
**characterized** in that the reinforcing elements (7, 18, 19, 23, 28) are made of steel.

3. A spot-type disc brake as claimed in claim 2,
**characterized** in that the surfaces of the reinforcing elements (7, 18, 19, 23, 28) are galvanized and/or nickeled.

4. A spot-type disc brake as claimed in any one of claims 1 to 3,
**characterized** in that the the reinforcing elements are customary screw bolts (7) of steel which, at their two end sections (8, 10), are positively connected with the floating caliper (1).

5. A spot-type disc brake as claimed in any one of the preceding claims,
**characterized** in that the floating caliper (1) has recesses (16) at the point(s) provided for support, a bolt (7) extending through said recesses, and in that the bolt (7) is supported on a radially outside narrow side (15) of a brake shoe (5).

6. A spot-type disc brake as claimed in claim 5,
**characterized** in that, at the point provided for the support of the floating caliper (1), the radially outside narrow side (15) of the brake shoe (5) is adapted to the abutting bolt (7) in a preferably bow-shaped manner.

7. A disc brake as claimed in any one of claims 1 to 3,
**characterized** in that the reinforcing elements have the design of hollow cylindrical sleeves (18, 19) or tubes.

8. A disc brake as claimed in claim 7,
**characterized** in that the sleeves (19) or tubes have a full-length slot (22) extending in the longitudinal direction.

9. A disc brake as claimed in any one of claims 1 to 3,
**characterized** in that the reinforcing elements have the design of massive cylindrical pins (23).

10. A disc brake as claimed in any one of claims 7 to 9,
**characterized** in that the reinforcing elements (18, 19, 23) are pressed into the bores (20) of the caliper bridge (4).

11. A disc brake as claimed in any one of claims 7 to 10,
**characterized** in that the bores of the caliper bridge (4) are pocket bores (20).

12. A disc brake as claimed in any one of claims 9 to 11,
**characterized** in that the pins (23) are provided with a groove (24) extending over their entire length.

13. A disc brake as claimed in claim 11,
**characterized** in that the reinforcing elements (23) are secured by means of a deformation (26) of the open end (27) of the pocket bores (20).

14. A disc brake as claimed in any one of claims 7 to 13,
**characterized** in that a total of twelve reinforcing elements (18, 19, 23) are arranged symmetrically to the brake centre in twelve bores (20) of the caliper bridge (4) and, relative to the brake disc axis, in two superposed rows of six reinforcing elements (18, 19, 23) at a time and offset with regard to each other.

15. A disc brake as claimed in any one of claims 7 to 14,
**characterized** in that further bores (34) with further reinforcing elements (33) plugged into them are arranged in a leg (32) of the floating caliper (1) adjacent to the caliper bridge (4), with the further reinforcing elements (33) essentially extending parallel to the brake disc and essentially perpendicularly to the caliper bridge 4.

16. A spot-type disc brake as claimed in any one of claims 1 to 3,
**characterized** in that the screw bolts (28) have a threading structure over their entire screw-in length, by means of which a thread is cut into the originally smooth bores (20) when the bolts (28) are screwed in.

17. A brake shoe for a floating-caliper disc brake as claimed in either of claims 5 or 6, with a backing plate carrying a friction pad, with two preferably hammer-head-type projections projecting laterally from the backing plate in the circumferential direction and intended for transmitting the friction forces to a brake carrier (2) and for the radial support of the floating caliper (1) on the brake carrier (2),
**characterized** in that the radially outside narrow sides (15) of the projections, which sides face the floating caliper (1), are provided with concave and essentially cylindrical recesses on whose surfaces a bolt (7) connected with the floating caliper (1) can be supported at a time.

## Revendications

1. Frein à disque à garnitures partielles à étrier flottant, comprenant un étrier flottant (1), qui est adapté à des garnitures de frein (5, 6) disposées, en vue de leur serrage, de part et d'autre d'un disque de frein, cet étrier flottant (1) entourant en U les garnitures de frein (5, 6) et comportant un pont d'étrier (4) qui recouvre axialement le bord radialement extérieur du disque de frein et les garniture de frein (5, 6) et qui transmet la force d'application du frein servant au serrage des garnitures de frein (5, 6), et aumoins un élément de renfort, notamment une pièce filetée, qui est disposé à l'intérieur du pont d'étrier (4) d'une manière pratiquement parallèle à l'axe du disque de frein, I'étrier flottant (1) étant pour l'essentiel formé d'une pièce moulée en aluminium et le ou les éléments de renfort étant en une matière à haute résistance, caractérisé en ce que les éléments de renfort prévus pour accroître la rigidité à la flexion de l'étrier flottant (1) sont formés de broches (23), manchons (18,19) ou pièces filetées (7, 28), pratiquement cylindriques, qui sont emboîtés ou vissés, pratiquement sans précontrainte axiale, dans des évidements (11) ou des alésages (20) qui s'étendent d'une manière pratiquement parallèle à l'axe du disque de frein, une section centrale (9) des éléments de renfort étant disposée au voisinage direct du bord radialement extérieur du disque de frein.

2. Frein à disque selon la revendication 1, caractérisé en ce que les éléments de renfort (7, 18, 19, 23, 28) sont en acier.

3. Frein à disque selon la revendication 2, caractérisé en ce que les surfaces des éléments de renfort (7, 18, 19, 23, 28) sont zinguées et/ou nickelées.

4. Frein à disque selon l'une des revendications 1 à 3, caractérisé en ce que les éléments de renfort sont des pièces filetées (7) du commerce, en acier, qui, à l'endroit de leurs deux sections d'extrémité (8, 10), sont solidaires de l'étrier flottant (1) par complémentarité de formes.

5. Frein à disque selon l'une des revendications précédentes, caractérisé en ce qu'à l'emplacement ou aux emplacements prévus pour l'appui, I'étrier flottant (1) comporte des évidements (16) dans lesquels une pièce filetée (7) s'étend et en ce que la pièce filetée (7) est en appui sur un petit côté radialement extérieur (15) d'une garniture de frein (5).

6. Frein à disque selon la revendication 5, caractérisé en ce qu'à l'emplacement prévu pour l'appui de l'étrier flottant (1), le petit côté radialement extérieur (15) de la garniture de frein (5) est adapté, de préférence en forme d'arc, à la pièce filetée (7) en appui.

7. Frein à disque selon l'une des revendications 1 à 3, caractérisé en ce que les éléments de renfort sont réalisées sous la forme de manchons cylindriques creux (18,19) ou tubes.

8. Frein à disque selon la revendication 7, caractérisé en ce que les manchons (19) ou tubes comportent une fente (22) continue suivant la direction longitudinale.

9. Frein à disque selon l'une des revendications 1 à 3, caractérisé en ce que les éléments de renfort sont réalisés sous la forme de broches cylindriques pleines (23).

10. Frein à disque selon l'une des revendications 7 à 9, caractérisé en ce que les éléments de renfort (18,19, 23) sont engagés à force dans les alésages (20) du pont d'étrier (4).

11. Frein à disque selon l'une des revendications 7 à 10, caractérisé en ce que les alésages du pont d'étrier (4) sont des alésages borgnes (20).

12. Frein à disque selon l'une des revendications 9 à 11, caractérisé en ce que les broches (23) sont pourvues d'une rainure (24) s'étendant sur toute leur longueur.

13. Frein à disque selon la revendication 11, caractérisé en ce que les éléments de renfort (23) sont immobilisés au moyen d'une partie déformée (26) de l'extrémité ouverte (27) des alésages borgnes (20).

14. Frein à disque selon l'une des revendications 7 à 13, caractérisé en ce qu'en tout, douze éléments de renfort (18, 19, 23) sont disposés dans douze alésages (20) du pont d'étrier (4), d'une manière symétrique vis-à-vis du milieu du frein, en deux rangées situées l'une au-dessus de l'autre vis-à-vis de l'axe du disque de frein et comportant chacune six éléments de renfort (18, 19, 23), et d'une manière décalée les uns vis-à-vis des autres.

15. Frein à disque selon les revendications 7 à 14, caractérisé en ce que d'autres alésages (34), dans lesquels d'autres éléments de renfort (33) sont emboîtés, sont ménagés dans une aile (32) de l'étrier flottant (1) qui est voisine du pont d'étrier (4), ces autres éléments de renfort (33) s'étendant d'une manière pratiquement parallèle au disque de frein et d'une manière pratiquement perpendiculaire au pont d'étrier (4).

16. Frein à disque selon l'une des revendications 1 à 3, caractérisé en ce que les pièces filetées (28) ont, sur toute la longueur suivant laquelle elles sont vissées, une structure filetée au moyen de laquelle, lors du vissage des pièces filetées (28), un taraudage est taillé dans les alésages (20) qui sont initialement lisses.

17. Garniture de frein pour frein à disque selon l'une des revendications 5 et 6, comprenant une plaquette de support qui porte une garniture de friction et comporte deux parties en saillie, en forme de tête de marteau, qui font saillie latéralement sur le côté de la plaquette de support suivant une direction circonférentielle et qui sont destinées à la transmission des forces de frottement à un support de frein (2) et à l'appui radial de l'étrier flottant (1) sur le support de frein (2), caractérisé en ce que les petits côtés radialement extérieurs (15) des parties en saillie qui font face à l'étrier flottant (1) sont pourvus d'évidements concaves, pratiquement cylindriques, sur la surface de chacun desquels peut prendre appui une pièce filetée (7) solidaire de l'étrier flottant (1).
